# EUROPÄISCHE PATENTSCHRIFT

(11) **EP 0 611 623 B1**
(45) Veröffentlichungstag und Bekanntmachung des Hinweises auf die Patenterteilung: **17.04.1996**
(21) Anmeldenummer: 93102592.8
(22) Anmeldetag: 19.02.1993
(51) Int. Cl.: B23B 29/24

(54) **Aufspannvorrichtung**
Fixing attachment
Dispositif de fixation

(43) Veröffentlichungstag der Anmeldung: 24.08.1994
(73) Patentinhaber: Alfred H. Schütte GmbH & Co. KG., D-51105 Köln (DE)
(72) Erfinder: Werner, Heinz A., Dipl.-Ing., W-5000 Köln 71 (DE)
(74) Vertreter: Hennicke, Albrecht, Dipl.-Ing.

(56) Entgegenhaltungen:
- EP-A- 0 423 426

## Beschreibung

Die Erfindung betrifft eine Aufspannvorrichtung, insbesondere für Werkzeuge oder Zusatzeinrichtungen von Werkzeugmaschinen, mit einem Halteblock, der mit Spannelementen an einer Aufspannplatte eines Maschinenschlittens o.dgl. arretierbar ist und erste Führungsmittel aufweist, die mit zweiten Führungsmitteln der Aufspannplatte zusammenwirken.

Derartige Aufspannvorrichtungen sind bekannt (siehe z.B. EP-A-0423426) und dienen beispielsweise dazu, die Schneidwerkzeuge von Drehautomaten schnell und leicht zu wechseln oder einzustellen und in ihrer Lage genau festzuspannen.

Zum Einstellen eines am Halteblock befestigten Werkzeugs weisen Aufspannvorrichtungen meist zwei oder mehrere parallele, an der Aufspannplatte angeordnete Führungsschienen auf, auf denen der Halteblock mit Führungsnuten verschieblich ist. Zum Festspannen des Halteblocks dienen im allgemeinen eine oder mehrere Hammerkopfschrauben, die durch den Halteblock hindurchgreifen und mit Muttern verschraubt sind. Die Hammerkopfschrauben sind zwischen den Führungsschienen in der Aufspannplatte verschieblich angeordnet.

Diese Anordnung hat den Nachteil, daß die Führungsschienen neben der Führung des Halteblocks auch die Auflager zum Übertragen der durch die Festspannung und die Zerspanung auftretenden Kräfte bilden. Da die Festspannkräfte zwischen den Auflagern des Halteblockes angreifen, kommt es zu beträchtlichen Biegemomenten, was zu Verformungen des Blocks, der Aufspannplatte und des darunter befindlichen Maschinenschlittens und damit zu unerwünschten Veränderungen in dessen Führungssystem führt.

Ein weiterer Nachteil dieser Anordnung besteht darin, daß die spezifischen Flächenpressungen zwischen den Führungsschienen und dem Halteblock beim Festspannen sehr groß sind.

Um Biegemomente im Halteblock und hohe Flächenpressungen zwischen dem Block und den Führungsleisten zu vermeiden, ist es auch bekannt, den Halteblock mit einer profilierten Spannfläche zu versehen, die zusammen mit einer ebenfalls profilierten Spannfläche der Aufspannplatte eine Führung beim Einstellen des Halteblocks bildet. Beim Festspannen des Blocks stützt sich dieser dann gleichermaßen über seine gesamte Spannfläche an der Aufspannplatte ab, so daß die Aufspannkräfte gleichmäßig verteilt werden und keine Verformungen des Halteblocks und keine großen Flächenpressungen zwischen den Spannflächen des Halteblocks und der Aufspannfläche auftreten.

Diese Anordnung hat jedoch den Nachteil, daß die Spannflächen des Halteblocks und die der Aufspannplatte mit außerordentlich großer Fertigungsgenauigkeit hergestellt werden müssen, um genau zueinander zu passen, da sonst eine absolute Spielfreiheit zwischen den beiden Maschinenteilen nicht erreicht wird oder sich der Halteblock mit seiner Spannfläche nicht flächig auf der Aufspannplatte abstützen kann, so daß es auch dann zu unerwünschten, hohen Flächenpressungen zwischen den Spannflächen kommt. Außerdem müssen diese Spannflächen immer außerordentlich gründlich gereinigt werden.

Aufgabe der Erfindung ist es, die beschriebenen Nachteile zu vermeiden und eine gattungsgemäße Aufspannvorrichtung, insbesondere für Werkzeuge von Werkzeugmaschinen so auszubilden, daß sie auch bei normaler Fertigungsgenauigkeit eine exakte und spielfreie Führung erlaubt, die gut zu reinigen ist und daß der Halteblock mit geringen Flächenpressungen an der Aufspannplatte arretiert werden kann, ohne daß es zu Verformungen des Halteblocks oder der Aufspannplatte infolge der Aufspann- oder Zerspanungskräfte kommt.

Diese Aufgabe wird mit der Erfindung dadurch gelöst, daß der Halteblock und die Aufspannplatte glatte Spannflächen haben und daß eines der Führungsmittel von Halteblock oder Aufspannplatte etwa senkrecht zu den Spannflächen beweglich, aber parallel zu den Spannflächen unbeweglich mit dem Halteblock bzw. der Aufspannplatte verbunden ist.

Diese Ausgestaltung hat den Vorteil, daß die Aufspann- und Schnittkräfte nur über die glatte Spannfläche des Halteblockes auf die Aufspannplatte übertragen werden, so daß auch bei großen zu übertragenden Kräften nur geringe Flächenpressungen zwischen dem Halteblock und der Aufspannplatte auftreten können. Da der Halteblock der Aufspannvorrichtung flächig auf der Aufspannplatte aufliegt, kann es auch nicht zu Verformungen des Halteblocks oder der Aufspannplatte durch Spanhkräfte und -momente kommen. Die Führungsmittel können keine Spann- oder Schnittkräfte, jedoch aber Vorschubkräfte übertragen, weil eines der Führungsmittel senkrecht zur Spannfläche beweglich angeordnet ist - Sie dienen daher lediglich zur Führung des Halteblocks in einer Richtung, wenn der Halteblock beispielsweise nach einem Werkzeugwechsel neu eingestellt wird.

Besonders vorteilhaft ist es, wenn sich das bewegliche Führungsmittel über ein Federelement an dem Halteblock oder der Aufspannplatte abstützt. Dadurch ist sichergestellt, daß sich das bewegliche Führungzmittel auch nach Lösen der Spannelemente immer genau an das andere Führungsmittel anpaßt und so eine exakte und spielfreie Positionierung des Halteblocks auf der Aufspannplatte ermöglicht. Beim Festspannen des Halteblocks auf der Aufspannplatte müssen die Führungsmittel lediglich die durch Verformung des Federelementes auftretende Federkraft aufnehmen.

Das eine Führungsmittel ist vorzugsweise eine Schiene mit etwa halbkreisförmigem Querschnitt und das andere Führungsmittel eine an die Schiene angepaßte Nut. Es ist auch möglich, daß die Schiene ein sich in Richtung auf das andere Führungsmittel verjüngendes Trapezprofil hat und das andere Führungsmittel eine hieran angepaßte Nut ist - Derartige Querschnitte erlauben eine sehr präzise Führung und ein genaues Positionieren des Halteblocks auf der Aufspannplatte.

Besonders zweckmäßig ist es, wenn das Federelement eine einseitig an dem Halteblock befestigte Blattfeder ist, an der das erste Führungsmittel angeordnet ist. Eine solche Anordnung ist leicht, genau und kostengünstig herstellbar und dabei auch sehr robust.

Der Halteblock kann ein einstellbares Anschlagelement für das erste Führungsmittel aufweisen. Das Anschlagelement kann beispielsweise eine Stellschraube sein, die durch den Halteblock hindurchgeschraubt ist und mit ihrem freien Ende einen Anschlag für das erste Führungsmittel bzw. das dieses tragende Federelement bildet. Dadurch wird sichergestellt, daß das Federelement beim Festspannen des Halteblocks nur in seinem elastischen Bereich verformt wird und beim Lösen der Aufspannung in seine ursprüngliche Lage zurückfedert.

Besonders vorteilhaft ist es, wenn das Anschlagelement eine Stellschraube ist, die an ihrer dem beweglichen Führungsmittel zugewandten Ende einen Federkörper mit einem Andruckelement aufweist. Der Federkörper stützt sich dann an der Stellschraube ab und drückt das Andruckelement immer gegen das bewegliche Führungsmittel. Durch diese zusätzliche Federkraft wird die Andruckkraft, mit der das bewegliche Führungsmittel gegen das feststehende Führungsmittel gedrückt wird, weiter erhöht. Beim Festspannen des Halteblocks auf der Aufspannplatte kann der Federkörper, der ein Tellerfederpaket sein kann, soweit zusammengedrückt werden, bis er sich nicht weiter verformen kann und dann einen definierten Anschlag für das bewegliche Führungsmittel bilden.

Das erste Führungsmittel kann eine Justiereinrichtung aufweisen, die zweckmäßig aus einer Spannschraube besteht, die durch den Halteblock hindurchgreift und mit dem ersten Führungsmittel oder der dieses tragenden Blattfeder verschraubt ist. Mit einer solchen Justiereinrichtung ist es möglich, Ungenauigkeiten der erwünschten Lage des Führungsmittels, die bei der Fertigung z.B. durch Härteverzug entstanden sind, auszugleichen und das erste Führungsmittel in seiner exakten Lage zum zweiten Führungsmittel der Aufspannplatte zu justieren, wie dies für die genaue Positionierung des Halteblocks erforderlich ist.

Weitere Merkmale und Vorteile der Erfindung ergeben sich aus der nachfolgenden Beschreibung und den Zeichnungen, in denen bevorzugte Ausführungsformen der Erfindung an Beispielen näher erläutert sind. Es zeigt:
- Fig. 1: eine Ansicht der Aufspannvorrichtung nach der Erfindung in Einstellrichtung des Halteblocks gesehen und teilweise im Schnitt;
- Fig. 2: den Gegenstand der Fig. 1 in einem Schnitt längs der Linie II-II in Fig. 1;
- Fig. 3: eine weitere Ausführungsform der Erfindung in einer der Fig. 1 entsprechenden Darstellung;
- Fig. 4: eine weitere Ausgestaltung einer Einzelheit der in Fig. 1 gezeigten Ausführungsform.

In der Zeichnung bezeichnet 10 eine Aufspannvorrichtung für einen Schnellwechsel-Werkzeughalter einer Werkzeugmaschine, z.B. eines Drehautomaten.

Die Aufspannvorrichtung 10 besteht im wesentlichen aus einem Halteblock 11 mit etwa rechteckigem Grundriß, der eine untere, ebene Spannfläche 12a aufweist, die flächig auf der oberen Spannfläche 12b einer Aufspannplatte 13 aufliegt. Die Aufspannplatte 13 ist in dem dargestellten Ausführungsbeispiel eine Unterlegplatte, die in nicht näher dargestellter Weise auf einem Maschinenschlitten 14 befestigt ist. Es ist aber auch möglich, daß der Maschinenschlitten 14 selbst die Aufspannplatte 13 ist.

Zum Arretieren auf der Aufspannplatte 13 hat der Halteblock 11 Hammerkopfschrauben 15, die mit Muttern 16 verschraubt sind und in gespanntem Zustand den Halteblock 11 auf die Aufspannplatte 13 pressen. Auch bei großen Spannkräften der Schrauben 15 bleiben die Flächenpressungen zwischen den Spannflächen 12a, b des Halteblocks 11 und der Aufspannplatte 13 dabei gering.

Der Halteblock 11 weist ferner als erstes Führungsmittel eine Führungsschiene 17 auf, die mit einer in der Aufspannplatte 13 angeordneten, ein zweites Führungsmittel bildenden Nut 18 zusammenwirkt, um den Halteblock 11 beim Einstellen seiner Lage auf der Aufspannplatte 13 in Längsrichtung exakt zu führen.

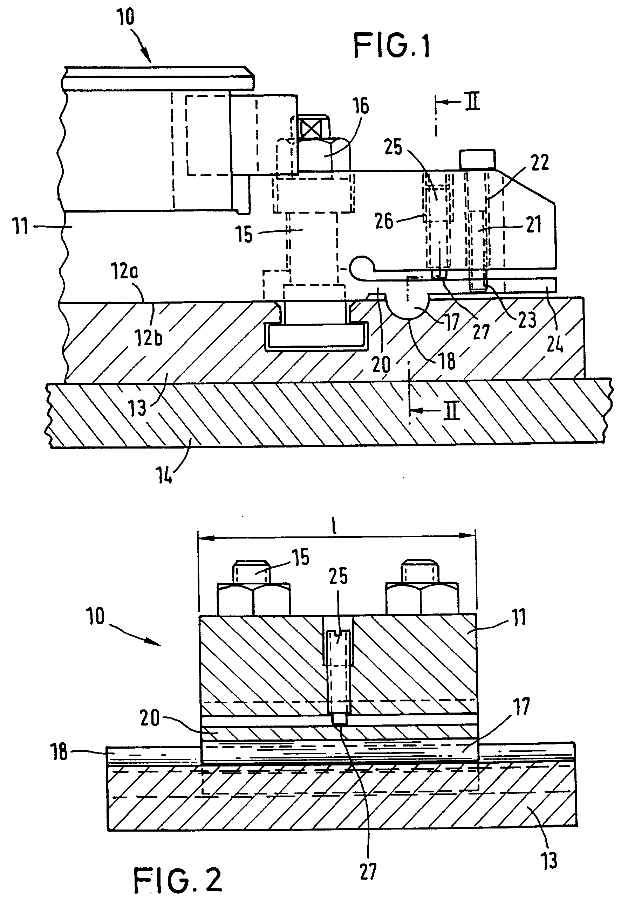

Die in den Fig. 1 und 2 dargestellte Führungsschiene 17 hat einen etwa halbkreisförmigen Querschnitt und ist an einer sich über die Länge l des Halteblocks 11 erstreckenden und an diesem einseitig befestigten Blattfeder 20 angeordnet - Die Schiene greift in die etwa halbkreisförmig ausgebildete Nut 18 in der Aufspannplatte 13 spielfrei ein und ermöglicht so ein genaues Führen des Halteblocks 11 in Längsrichtung der Nut 18 in der Aufspannplatte 13, wenn die Spannschrauben 15 gelöst sind.

Beim Aufspannen des Halteblocks 11 auf der Aufspannplatte 13 durch Festziehen der Spannmuttern 16 kann die Schiene 17 senkrecht zur Spannfläche 12a nach oben entgegen der Rückstellkraft der Blattfeder 20 ausweichen, die dadurch im Bereich ihrer Befestigung am Halteblock 11 elastisch verbogen wird. Nach dem Lockern der Spannmuttern wird die Schiene 17 von der Blattfeder immer in die rinnenförmige Führungsnut 18 gedrückt und garantiert so eine spielfreie Gleitführung des Halteblocks 10 auf der Aufspannplatte 13.

Um zu verhindern, daß die Schiene 17 von der Blattfeder 20 so stark in die Führungsnut 18 gedrückt wird, daß der Halteblock 11 übermäßig von der Aufspannplatte 13 abgehoben wird, wenn die Spannmuttern 16 gelöst werden, ist die Schiene 17 mit einer aus einer Einstellschraube 21 bestehenden Justiereinrichtung versehen, die durch eine Durchgangsbohrung 22 in dem Halteblock 11 hindurchgreift und in eine Gewindebohrung 23 am freien Ende 24 der Blattfeder 20 eingeschraubt ist. Mit dieser Einstellschraube 21 kann der maximale Ausschlag der Blattfeder 20 in Richtung auf die Aufspannplatte 13 begrenzt werden. Außerdem können Fertigungsungenauigkeiten, die bei der Herstellung der Aufspannvorrichtung z.B. durch Härteverzug der Feder entstehen können, ausgeglichen werden.

Die Aufspannvorrichtung 10 hat eine selbstsichernde Spannschraube 25, die in eine Gewindebohrung 26 im Halteblock 11 geschraubt ist und deren unteres Ende einen Anschlag 27 für die Blattfeder 20 bildet.

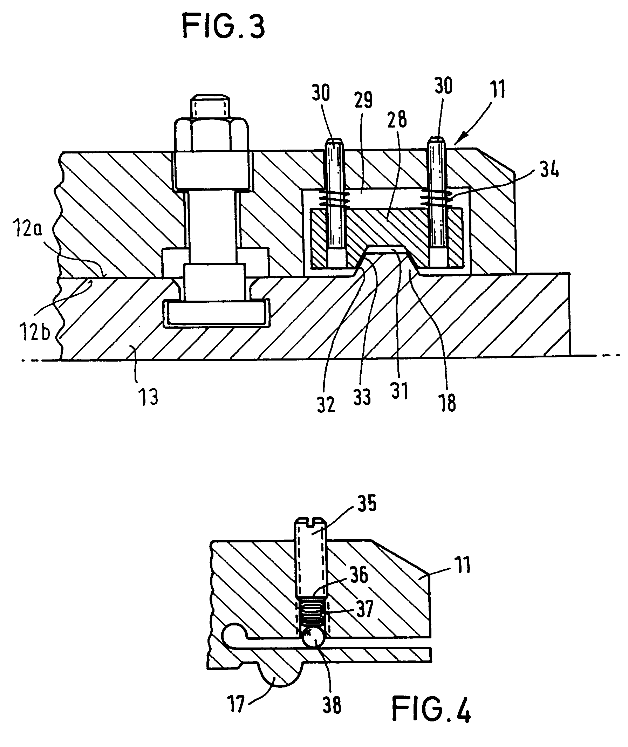

Fig. 3 zeigt eine weitere Ausführungsform der Aufspannvorrichtung 10 für Werkzeuge. Das erste Führungsmittel 17 besteht dabei aus einem senkrecht zur Spannfläche 12 beweglichen Führungselement 28, das in einer Ausnehmung 29 im Halteblock 11 mit Paßstiften 30 geführt ist. Des Führungselement 28 hat an seiner Unterseite eine trapezförmige und sich über die Länge l des Halteblocks 11 erstreckende Nut 31, deren schräge Seitenflächen 32 an Führungsflächen 33 einer ebenfalls trapezförmigen, das zweite Führungsmittel bildenden Führungsschiene 18 anliegen und so eine genaue und spielfreie Führung des Halteblocks 11 ermöglichen. Dabei wird das Führungselement 28 von Schraubenfedern 34 auf die Führungsschiene 18 gedrückt, die um die Paßstifte 30 angeordnet sind und sich einerseits am Halteblock 11 und andererseits an dem Führungselement 28 abstützen.

Fig. 4 zeigt eine weitere Ausgestaltung des Anschlagelementes nach Fig. 1. Das Anschlagelement 25 besteht hierbei aus einer Stellschraube 35, an deren unterem Ende 36 sich ein Federkörper 37 aus Tellerfedern abstützt, der eine Kugel 38 gegen das bewegliche Führungsmittel 17 drückt. Durch Verstellen der Stellschraube 35 kann die Vorspannung des Federkörpers 37 eingestellt und so die Andruckdruckkraft des ersten gegen das zweite Führungsmittel verändert werden. Wenn der Halteblock 11 auf der Aufspannplatte 13 festgespannt wird, wird die Schiene 17 nach oben bewegt und drückt dann den Federkörper 35 vollständig zusammen, so daß dann ein fester Anschlag für das bewegliche Führungsmittel entsteht.

Die Erfindung ist nicht auf die beschriebenen Ausführungsformen beschränkt, sondern es ergeben sich vielfältige Änderungsmöglichkeiten, ohne den Rahmen der Erfindung, wie er durch die Patentanspruche definiert ist, zu verlassen. So ist es beispielsweise möglich, daß der Halteblock mit zwei oder mehreren ersten Führungsmitteln an dazugehörigen, an der Aufspannplatte angeordneten zweiten Führungsmitteln geführt ist. Die Führungsschiene kann auch ein anderes Profil, beispielsweise ein Polygon-Profil haben.

## Patentansprüche

1. Aufspannvorrichtung (10), insbesondere für Werkzeuge oder Zusatzeinrichtungen von Werkzeugmaschinen, mit einem Halteblock (11), der mit Spannelementen (15, 16) an einer Aufspannplatte (13) eines Maschinenschlittens (14) o.dgl. arretierbar ist und erste Führungsmittel (17, 28) aufweist, die mit zweiten Führungsmitteln (18) der Aufspannplatte (13) zusammenwirken, **dadurch gekennzeichnet,** daß der Halteblock (11) und die Aufspannplatte (13) glatte Spannflächen (12a, 12b) haben und daß eines der Führungsmittel (17, 28) von Halteblock (11) oder Aufspannplatte (13) senkrecht zu den Spannflächen (12a, 12b) beweglich, aber parallel zu den Spannflächen (12a, 12b) unbeweglich mit dem Halteblock (11) bzw. der Aufspannplatte (13) verbunden ist.

2. Vorrichtung nach Anspruch 1, **dadurch gekennzeichnet,** daß sich das bewegliche Führungsmittel (17, 28) über mindestens ein Federelement (20, 34) an dem Halteblock (11) oder der Aufspannplatte (13) abstützt.

3. Vorrichtung nach Anspruch 1 oder 2, **dadurch gekennzeichnet,** daß das eine Führungsmittel (17, 18) eine Schiene mit etwa halbkreisförmigem Querschnitt ist und das andere Führungsmittel (18, 17) eine an die Schiene angepaßte Nut ist.

4. Vorrichtung nach einem der Ansprüche 2 oder 3, **dadurch gekennzeichnet,** daß das Federelement (20, 34) eine einseitig an dem Halteblock (11) befestigte Blattfeder ist, an der das erste Führungsmittel (17) angeordnet ist.

5. Vorrichtung nach einem der Ansprüche 1 bis 4, **dadurch gekennzeichnet,** daß der Halteblock (11) ein einstellbares Anschlagelement (25) für das erste Führungsmittel (17) aufweist.

6. Vorrichtung nach Anspruch 5, **dadurch gekennzeichnet,** daß das Anschlagelement (25) eine Stellschraube (35) ist, die an ihrem dem beweglichen Führungsmittel (17, 28) zugewandten Ende (36) einen Federkörper (37) mit einem Andruckelement (38) aufweist.

7. Vorrichtung nach einem der Ansprüche 1 bis 6, **dadurch gekennzeichnet,** daß das erste Führungsmittel (17) eine Justiereinrichtung (21) aufweist.

8. Vorrichtung nach Anspruch 7, **dadurch gekennzeichnet,** daß die Justiereinrichtung (21) aus einer Spannschraube besteht, die durch den Halteblock (11) hindurchgreift und mit dem ersten Führungsmittel (17) oder dem Federelement (20) verschraubt ist.

## Claims

1. Clamping device (10), in particular for tools or machine tool accessories, comprising a clamping block (11), which is arrested by clamping elements (15, 16) on a clamping plate (13) of a machine carriage (14) or the like and which comprises first guide means (17, 28) which co-operate with second guide means (18) of the clamping plate (13), **characterized in that** the clamping block (11) and the clamping plate (13) have smooth clamping surfaces (12a, 12b), and that one of the guide means (17, 28) is connected to the clamping block (11) or the clamping plate (13) so as to be mobile vertically to the clamping surfaces (12a, 12b) but immobile parallel to the clamping surfaces (12a, 12b).

2. Device according to Claim 1, **characterized in that** the mobile guide means (17, 28) is supported against the clamping block (11) or the clamping plate (13) via at least one spring element (20, 34).

3. Device according to Claim 1 or 2, **characterized in that** the one guide means (17, 18) is a rail of approximately semi-circular cross-section, and the other guide means (18,17) is a groove to match the rail.

4. Device according to one of Claims 2 or 3, **characterized in that** the spring element (20, 34) is a leaf spring which is singlesidedly attached to the clamping block (11) and to which the first guide means (17) is fitted.

5. Device according to one of Claims 1 to 4, **characterized in that** the clamping block (11) comprises an adjustable stop element (25) for the first guide means (17).

6. Device according to Claim 5, **characterized in that** the stop element (25) is a setscrew (35) having at its end (36) facing towards the mobile guide means (17, 28) a spring element (37) with a press-on element (38).

7. Device according to one of Claims 1 to 6, **characterized in that** the first guide means (17) comprises an adjustment mechanism (21).

8. Device according to Claim 7, **characterized in that** the adjustment mechanism (21) is composed of a clamping bolt, which passes through the clamping block (11) and which can be bolted to the first guide means (17) or the spring element (20).

## Revendications

1. Dispositif de blocage (10), en particulier pour des outils ou des accessoires de machines-outils, comprenant un bloc de fixation (11) qui peut être immobilisé avec des éléments de serrage (15, 16) sur une plaque de blocage (13) d'un chariot de machine (14) ou analogue et qui présente des premiers moyens de guidage (17, 28), qui coopèrent avec des deuxièmes moyens de guidage (18) de la plaque de blocage (13), caractérisé en ce que le bloc de fixation (11) et la plaque de blocage (13) ont des surfaces de serrage lisses (12a, 12b), et que l'un des moyens de guidage (17, 28) du bloc de fixation (11) et de la plaque de blocage (13) est relié au bloc de fixation (11) ou à la plaque de blocage (13) de manière mobile approximativement perpendiculairement aux surfaces de serrage (12a, 12b), mais immobile parallèlement aux surfaces de serrage (12a, 12b).

2. Dispositif selon la revendication 1, caractérisé en ce que le moyens de guidage mobile (17, 28) s'appuie sur le bloc de fixation (11) ou la plaque de blocage (13) par l'intermédiaire d'au moins un élément à ressort (20, 34).

3. Dispositif selon la revendication 1 ou 2, caractérisé en ce que le premier moyen de guidage (17, 18) est un rail de section approximative en demi-cercle et l'autre moyen de guidage (18, 17) est une rainure adaptée au rail.

4. Dispositif selon la revendication 2 ou 3, caractérisé en ce que l'élément à ressort (20, 34) est un ressort à lames fixé unilatéralement au bloc de fixation (11) et sur lequel est placé le premier moyen de guidage (17).

5. Dispositif selon l'une des revendications 1 à 4, caractérisé en ce que le bloc de fixation (11) présente un élément de butée réglable (25) pour le premier moyen de guidage (17).

6. Dispositif selon la revendication 5, caractérisé en ce que l'élément de butée (25) est une vis de réglage (35) qui, à son extrémité (36) tournée vers le moyen de guidage mobile (17, 28), présente un corps de ressort (37) avec un élément d'appui (38).

7. Dispositif selon l'une des revendications 1 à 6, caractérisé en ce que le premier moyen de guidage (17) présente un dispositif d'ajustement (21).

8. Dispositif selon la revendication 7, caractérisé en ce que le dispositif d'ajustement (21) est constitué d'une vis de serrage, qui traverse le bloc de fixation (11) et se visse avec le premier moyen de guidage (17) ou l'élément à ressort (20).
